# EUROPEAN PATENT APPLICATION

(11) **EP 3 859 522 A1**
(43) Date of publication of application: **04.08.2021**
(21) Application number: 19865743.9
(22) Date of filing: 04.06.2019
(51) Int. Cl.: G06F 9/451

(54) **METHOD AND SYSTEM FOR CONTROLLING DISPLAY ORIENTATION, AND MOBILE TERMINAL**

(30) Priority: 27.09.2018 CN 201811130200
(71) Applicant: GUANGDONG OPPO MOBILE TELECOMMUNICATIONS CORP., LTD., Wusha, Chang'an Town Dongguan, Guangdong 523860 (CN)
(72) Inventor: LI, Tongxi, Dongguan, Guangdong 523860 (CN); FU, Liangjing, Dongguan, Guangdong 523860 (CN); LIN, Zhiyong, Dongguan, Guangdong 523860 (CN); JING, Lei, Dongguan, Guangdong 523860 (CN)
(74) Representative: Manitz Finsterwald Patent- und Rechtsanwaltspartnerschaft mbB
(86) International application number: PCT/CN2019/089986
(87) International publication number: WO 2020/062908

(57) **Abstract**

The disclosure can be applicable to the field of displaying technologies and provide a method for controlling a displaying direction, a system for controlling a displaying direction, and a mobile terminal. The disclosure may detect an adjustment event for a displaying direction of a focus window, determine the displaying direction of the focus window based on the adjustment event when the adjustment event is detected, and adaptively adjust a displaying direction of an underlying application corresponding to the focus window based on the displaying direction of the focus window. The disclosure may achieve flexible control of the displaying direction of the focus window, and enable the displaying direction of the corresponding underlying application to correspond to the displaying direction of the focus window. The display effect and user experience can be effectively improved.

## Description

### FIELD

The disclosure relates to the field of displaying technologies, and more particularly to, a method for controlling a displaying direction, a system for controlling a displaying direction, and a mobile terminal.

### BACKGROUND

It has become possible to display windows corresponding to multiple applications on screens of mobile terminals at the same time as the enlargement of the screens of the mobile terminals and the expansion of various applications, bringing a good visual and operating experience to users.

### SUMMARY

In a first aspect, embodiments of the disclosure provide a method for controlling a displaying direction. The method includes: detecting an adjustment event for a displaying direction of a focus window, the focus window being a window being currently operated by a user, and the adjustment event being an event for triggering a terminal to adjust the displaying direction of the focus window; determining the displaying direction of the focus window based on the adjustment event when the adjustment event is detected; and adaptively adjusting a displaying direction of an underlying application corresponding to the focus window based on the displaying direction of the focus window.

In a second aspect, embodiments of the disclosure provide a system for controlling a displaying direction. The system includes: a detecting module, configured to detect an adjustment event for a displaying direction of a focus window, the focus window being a window being currently operated by a user, and the adjustment event being an event for triggering a terminal to adjust the displaying direction of the focus window; a window direction determining module, configured to determine the displaying direction of the focus window based on the adjustment event when the adjustment event is detected; and an application direction adjusting module, configured to adaptively adjust a displaying direction of an underlying application corresponding to the focus window based on the displaying direction of the focus window.

In a third aspect, embodiments of the disclosure provide a mobile terminal. The mobile terminal includes a memory, a processor, and a computer program stored in the memory and for running on the processor. The processor is configured to perform actions of the above method when executing the computer program.

In a fourth aspect, embodiments of the disclosure provide a computer-readable storage medium having stored computer programs thereon. The computer programs perform actions of the above method when being executed by a processor.

### BRIEF DESCRIPTION OF THE DRAWINGS

In order to more clearly illustrate technical solutions in embodiments of the disclosure, a brief description will be made below to accompanying drawings that need to be used in the embodiments or in the related art. Obviously, the accompanying drawings in the following descriptions are only some embodiments of the disclosure, and for those skilled in the art, other accompanying drawings can be obtained according to these accompanying drawings without creative labor.
FIG. 1 is a flow chart illustrating a method for controlling a displaying direction according to embodiments of the disclosure.
FIG. 2 is another flow chart illustrating a method for controlling a displaying direction according to embodiments of the disclosure.
FIG. 3 is a schematic diagram illustrating a displaying interface of a free window of a landscape direction and a portrait direction according to embodiments of the disclosure.
FIG. 4 is a block diagram illustrating a system for controlling a displaying direction according to embodiments of the disclosure.
FIG. 5 is block diagram illustrating a mobile terminal according to embodiments of the disclosure.

### DETAILED DESCRIPTION

In order to enable those skilled in the art to better understand solutions of the disclosure, technical solutions in embodiments of the disclosure will be clearly described below in conjunction with the accompanying drawings in the embodiments of the disclosure. Obviously, the described embodiments are part of the embodiments of the disclosure, not all the embodiments of the disclosure. All other embodiments obtained by those skilled in the art without creative work based on the embodiments in the disclosure should fall within the scope of the disclosure.

The "comprising" and any variations thereof in the specification and claims of the disclosure and in the above-mentioned drawings are intended to cover non-exclusive inclusions. For example, a process, method, system, product, or device that includes a series of actions or units is not limited to the listed actions or units, but optionally includes unlisted actions or units, or optionally includes actions steps or units inherent in these processes, methods, products or devices. In addition, the terms "first", "second", and "third" are used to distinguish different objects, rather than describing a specific order.

### Embodiment One

Embodiments provide a method for controlling a displaying direction. The method may be applicable to any mobile terminal with a multi-window displaying function, such as a mobile phone, a tablet computer, and a personal digital assistant.

In applications, the mobile terminal may be an Android terminal that supports four displaying modes: a full-screen mode, a split-screen mode, a picture-in-picture mode, and a FreeForm mode. A window displayed by the mobile terminal under the FreeForm mode is a FreeForm window, also known as a free window or a dynamic window. A size of the FreeForm window may be zoomed in or out and dragged freely.

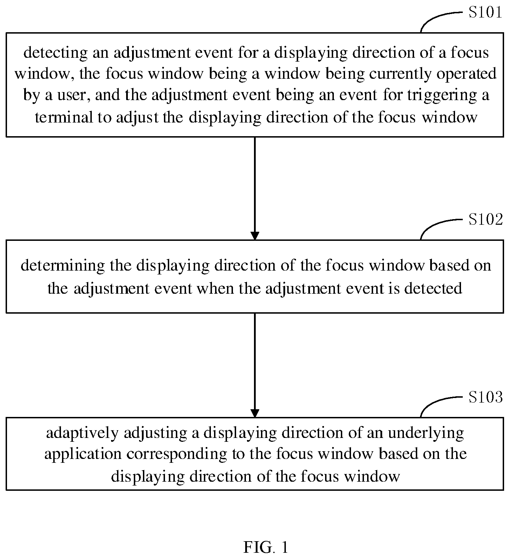

As illustrated in FIG. 1, the method provided in the embodiments may include the following.

At block S101, an adjustment event for a displaying direction of a focus window is detected. The focus window is a window being currently operated by a user. The adjustment event is an event for triggering a terminal to adjust the displaying direction of the focus window.

In embodiments, the focus window refers to the window that the user is currently operating. If the user is not currently operating any window, the focus window may be a window that is currently displayed in the foreground and is last operated by the user.

In applications, the multi-window displaying of the Android system is implemented based on a multi-Stack solution. That is, there are multiple Activity Stacks. The Activity Stack is an abstract Stack. Each Stack has its own screen region bound and id (identity identification number or unique code). The Activity is organized in a Task mode and placed on a certain Stack. For example, the desktop launcher (Launcher) and the recent taskbar (RecentsActivity) belong to the Stack with id=HOME_STACK; the split-screen mode of upper and lower corresponds to the upper Stack and the lower Stack, and the screen is divided into the upper bound and the lower bound. There may be one Focus Stack and one Focus Activity in the entire Android system, that is, the entire system will have one focus at the same time, corresponding to one focus window. In which Activity the user operates, the focus Activity points to that Activity, and the focus Stack points to the Stack to which the focus Activity belongs, that is, which window the user operates in, which window is the focus window.

In embodiments, the adjustment event for the displaying direction of the focus window refers to an event that triggers the terminal to adjust the displaying direction of the focus window. Upon detection of the adjustment event, the terminal may be triggered to adjust the displaying direction of the focus window.

In applications, the adjustment event for the displaying direction of the focus window may include a change in a screen direction of the terminal, reception of an instruction for adjusting the displaying direction of the focus window, and a touch event for the focus window. The touch event for the focus window may be set in advance based on the user's actual usage habits. For example, the touch event for the focus window may be set to as an unconventional touch operation such as long pressing a blank region of the focus window, single-point or multi-point touching and rotating a blank region of the focus window, single-point or multi-point touching and rotating a corner region of the focus window. By setting the touch event for the focus window as the unconventional touch operation, it may be avoided to be the same as other conventional operations, so as to effectively prevent misoperation.

At block S102, the displaying direction of the focus window is determined based on the adjustment event when the adjustment event is detected.

In applications, when the adjustment event for the displaying direction of the focus window is detected, the displaying direction of the focus window may be determined based on the adjustment event. Different adjustment events are used to adjust the displaying direction of the focus window to which direction, which may be set in advance as needed actually. The displaying direction of the focus window may be usually adjusted to the same landscape or portrait direction as the screen direction of the terminal. The corresponding relationship between the adjustment events and the displaying directions of the focus window may be set in advance. For example, when the adjustment event is the change in the screen direction of the terminal, the corresponding relationship between the adjustment event and the displaying direction of the focus window may be that: the displaying direction of the focus window changes following the screen direction of the terminal, and the displaying directions of the focus window is the same as the screen direction of the terminal.

At block 103, a displaying direction of an underlying application corresponding to the focus window is adaptively adjusted based on the displaying direction of the focus window.

In applications, the corresponding relationship between the displaying direction of the focus window and the displaying direction of the underlying application corresponding to the focus window may be set in advance, to adaptively adjust the displaying direction of the underlying application corresponding to the focus window. The corresponding relationship between the displaying direction of the focus window and the displaying direction of the underlying application corresponding to the focus window may be that: the displaying direction of the underlying application corresponding to the focus window changes following the displaying direction of the focus window, and the displaying direction of the underlying application corresponding to the focus window is the same as the displaying direction of the focus window.

In some embodiments, the method further includes the following after the action at block S 102.

A displaying direction of a non-focus window is adjusted to be the same as the displaying direction of the focus window when there is the non-focus window.

A displaying direction of an underlying application corresponding to the non-focus window is adaptively adjusted based on the displaying direction of the non-focus window.

In some embodiments, the non-focus window may include a window running in the foreground and being not currently operated by the user. By adjusting the displaying direction of the non-focus window running in the foreground to be the same as the displaying direction of the focus window, the displaying directions of all windows on the current displaying interface may be made to be consistent, and the displaying effect may be improved. Although the underlying application running in the background is not displayed on the current displaying interface, it will not affect the displaying effect. However, when the user switches the underlying application running in the background to the foreground to be displayed through the window, if the underlying application running in the background is still the previous displaying direction, it will affect the displaying effect of the screen. Therefore, when adjusting the displaying direction of the focus window, the displaying direction of the corresponding underlying application running in the background should also be adjusted accordingly. Therefore, when the underlying application running in the background is switched to run in the foreground, it may show a good displaying effect.

In some embodiments, the focus window includes a free window.

In applications, the displaying direction of the free window is usually determined by the displaying direction of the underlying application of the free window. If the displaying direction and related direction settings of the underlying application are not changed, the displaying direction of the free window will usually remain unchanged. The displaying direction of the free window and the displaying direction of the corresponding underlying application may be determined based on the adjustment event, such that the displaying direction of the window may not be restricted by the displaying direction of the underlying application, and the displaying direction of the underlying application change following the displaying direction of the corresponding free window.

In some embodiments, the method further includes the following.

A displaying direction of a new focus window is adaptively adjusted based on the displaying direction of the focus window when the focus window is switched to the new focus window.

In applications, when a new focus window is launched or the currently displayed focus window is switched to any one of the non-focus windows, thus displaying the new focus window, the displaying direction of the new focus window may be adjusted adaptively according to the displaying direction of the currently displayed focus window. That is, the displaying direction of the new focus window may be made to be consistent with the displaying direction of the currently displayed focus window, thereby improving the displaying effect of the new focus window. After adjusting the displaying direction of the new focus window, actions at blocks S101 to S 103 may be performed for the new focus window to adaptively adjust the displaying direction of the underlying application corresponding to the new focus window.

The embodiments may detect the adjustment event for the displaying direction of the focus window, determine the displaying direction of the focus window based on the adjustment event, and adaptively adjust the displaying direction of the underlying application corresponding to the focus window based on the displaying direction of the focus window. The disclosure may achieve flexible control of the displaying direction of the focus window, and enable the displaying direction of the corresponding underlying application to correspond to the displaying direction of the focus window. The display effect and user experience can be effectively improved. The disclosure may effectively solve the problem that the displaying direction of the window in the mobile terminal is limited to the displaying direction of the underlying application corresponding to the window and cannot be flexibly controlled, and the user experience is poor.

### Embodiment Two

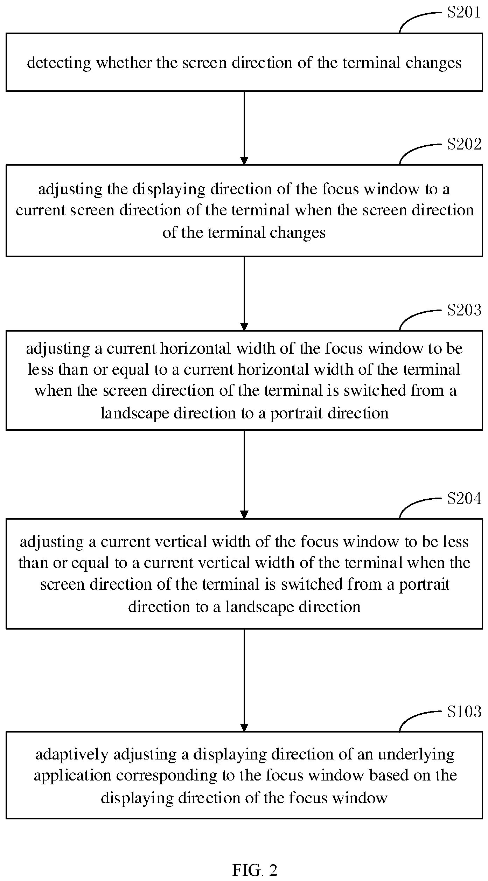

As illustrated in FIG. 2, in some embodiments, the adjustment event includes a change in a screen direction of the terminal.

Correspondingly, the action at block S101 may include the action at block S201.

At block 201, it is detected whether the screen direction of the terminal changes. Correspondingly, the action at block S102 may include the action at block S202.

At block 202, the displaying direction of the focus window is adjusted to a current screen direction of the terminal when the screen direction of the terminal changes.

In applications, the screen direction of the terminal and the change of the screen direction may be detected by a gravity sensor and/or a gyroscope provided in the terminal. The screen direction usually includes a landscape direction and a portrait direction. The screen direction further includes an oblique direction. An angle between the oblique direction and the landscape direction and an angle between the oblique direction and the portrait direction both are greater than 0° and less than 90°. By adjusting the displaying direction of the focus window to the current screen direction of the terminal, the displaying direction of the focus window changes following the current screen direction, and the best displaying effect may be presented.

As illustrated in FIG. 2, in some embodiments, after the action at block S202, the method further includes the following.

At block S203, a current horizontal width of the focus window is adjusted to be less than or equal to a current horizontal width of the terminal when the screen direction of the terminal is switched from a landscape direction to a portrait direction.

At block S204, a current vertical width of the focus window is adjusted to be less than or equal to a current vertical width of the terminal when the screen direction of the terminal is switched from a portrait direction to a landscape direction.

In applications, when the screen direction of the terminal is switched from the landscape direction to the portrait direction, if only the displaying direction of the focus window is changed to follow the screen direction of the terminal, the current horizontal width of the focus window may be greater than the current horizontal width of the terminal, resulting in the incomplete displaying of the focus window in the horizontal direction, which affects the displaying effect. Therefore, the current horizontal width of the focus window needs to be adjusted accordingly, and the current horizontal width of the focus window is adjusted to be less than or equal to the current horizontal width of the terminal, so that the focus window may be fully displayed in the horizontal direction to improve the displaying effect.

Similarly, when the screen direction of the terminal is switched from the portrait direction to the landscape direction, if only the displaying direction of the focus window is changed to follow the screen direction of the terminal, the current vertical width of the focus window may be greater than the current vertical width of the terminal, resulting in the incomplete displaying of the focus window in the vertical direction, which affects the displaying effect. Therefore, the current vertical width of the focus window needs to be adjusted accordingly, and the current vertical width of the focus window is adjusted to be less than or equal to the current vertical width of the terminal, so that the focus window may be fully displayed in the vertical direction to improve the displaying effect.

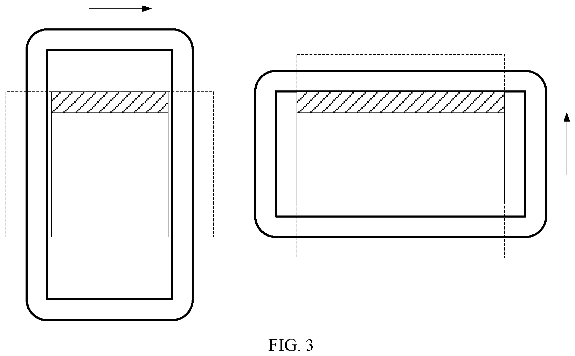

As illustrated in FIG. 3, a schematic diagram may illustrate a displaying interface of a free window of a landscape direction and a portrait direction according to embodiments of the disclosure. The left picture in FIG. 3 exemplarily shows that the screen direction of the terminal is the portrait direction and the current horizontal width of the focus window is smaller than the current horizontal width of the terminal, the arrow (→) direction in the left picture in FIG. 3 indicates the horizontal width direction, and the dashed frame indicates the size of the focus window before adjustment. The right picture in FIG. 3 exemplarily shows that the screen direction of the terminal is the landscape direction, and the current vertical width of the focus window is smaller than the current vertical width of the terminal, the arrow (→) direction in the right figure in FIG. 3 indicates the vertical width direction, and the dashed frame indicates the size of the focus window before adjustment.

In applications, the horizontal width and vertical width of the underlying application corresponding to the focus window, the non-focus window, and the underlying application corresponding to the non-focus window may be adjusted in the same manner as the focus window, which will not be repeated here.

In some embodiments, the adjustment event includes receiving an instruction for adjusting the displaying direction of the focus window.

Correspondingly, the action at block S101 may include the following.

It is detected whether the instruction is received. The instruction is configured for triggering the terminal to adjust the displaying direction of the focus window.

Correspondingly, the action at block S102 may include the following.

The displaying direction of the focus window is adjusted to a displaying direction corresponding to the instruction when the instruction is received.

In applications, the instruction may be inputted through a button for inputting the instruction or a toolbar in a region where a current displaying interface or the focus window is located, or through a system setting interface of the terminal, or through a voice control manner, or through a gesture control manner. The instruction may be text information, voice information, or a gesture in detail, corresponding to the direction to be adjusted. For example, text information indicating left rotation may be inputted through the toolbar in the region where the current displaying interface or the focus window is located, and the focus window will rotate to the left. The specific rotation angle may be set according to actual needs, and the rotation angle is usually 90°.

In some embodiments, the adjustment event includes a touch event for the focus window. Correspondingly, the action at block S102 may include the following.

The displaying direction of the focus window is adjusted to a displaying direction corresponding to the touch event based on the touch event.

In applications, a touch operation included in the touch event may be set in advance according to the actual usage habits of the user. For example, the touch event may be an operation of single-point touching and sliding a corner region of the focus window. A sliding direction is a rotation direction of the focus window, and a rotation angle is positively correlated with a sliding distance along the sliding direction.

In some embodiments, by adjusting the displaying direction and displaying size of the focus window according to the screen direction of the terminal, it is possible to flexibly change the displaying direction of the focus window while ensuring that the focus window may be fully displayed and always present the best displaying effect.

It should be understood that the size of the sequence number of each action in the foregoing embodiments does not mean the order of execution. The execution sequence of each process should be determined by its function and internal logic, and should not constitute any limitation on the implementation process of the embodiments of the disclosure.

### Embodiments Three

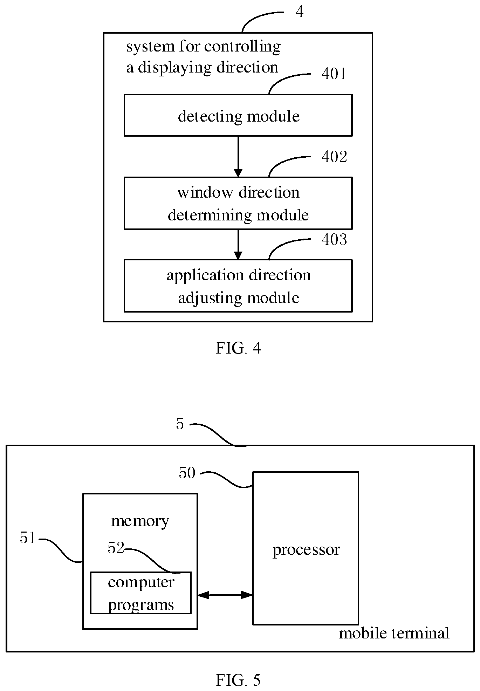

As illustrated in Fig. 4, embodiments provide a system 4 for controlling a displaying direction for implementing actions of methods in Embodiment One or Embodiment Two. The system 4 may be a software program system in any mobile terminal with a multi-window displaying function. The system 4 may include a detecting module 401, a window direction determining module 402, and an application direction adjusting module 403.

The detecting module 401 is configured to detect an adjustment event for a displaying direction of a focus window. The focus window is a window being currently operated by a user. The adjustment event is an event for triggering a terminal to adjust the displaying direction of the focus window.

The window direction determining module 402 is configured to determine the displaying direction of the focus window based on the adjustment event when the adjustment event is detected.

The application direction adjusting module 403 is configured to adaptively adjust a displaying direction of an underlying application corresponding to the focus window based on the displaying direction of the focus window.

In applications, the detecting module may include devices of the terminal such as a gyroscope, a gravity sensor, an acceleration sensor, a touch chip, a keyboard, a button, a microphone, and a camera.

In some embodiments, the adjustment event includes a change in a screen direction of the terminal.

Correspondingly, the detecting module is configured to detect whether the screen direction of the terminal changes.

Correspondingly, the window direction determining module is configured to adjust the displaying direction of the focus window to a current screen direction of the terminal when the screen direction of the terminal changes.

In some embodiments, the system further includes a direction adjusting module.

The direction adjusting module is configured to adjust a current horizontal width of the focus window to be less than or equal to a current horizontal width of the terminal when the screen direction of the terminal is switched from a landscape direction to a portrait direction.

The direction adjusting module is configured to adjust a current vertical width of the focus window to be less than or equal to a current vertical width of the terminal when the screen direction of the terminal is switched from a portrait direction to a landscape direction.

In some embodiments, the window direction determining module is further configured to adjust a displaying direction of a non-focus window to be the same as the displaying direction of the focus window when there is the non-focus window.

The application direction adjusting module is further configured to adaptively adjust a displaying direction of an underlying application corresponding to the non-focus window based on the displaying direction of the non-focus window.

In some embodiments, the adjustment event includes receiving an instruction for adjusting the displaying direction of the focus window.

Correspondingly, the detecting module is configured to detect whether the instruction is received. The instruction is configured for triggering the terminal to adjust the displaying direction of the focus window.

Correspondingly, the window direction determining module is configured to adjust the displaying direction of the focus window to a displaying direction corresponding to the instruction when the instruction is received.

In some embodiments, the adjustment event includes a touch event for the focus window.

Correspondingly, the window direction determining module is configured to adjust the displaying direction of the focus window to a displaying direction corresponding to the touch event based on the touch event.

In some embodiments, the window direction determining module is configured to adaptively adjust a displaying direction of a new focus window based on the displaying direction of the focus window when the focus window is switched to the new focus window.

In applications, the detecting module, the window direction determining module, and the application direction adjusting module may be software program modules in the processor of the terminal, or may be independent processors with each other. The processor may be a central processing unit (CPU), a general-purpose processor, a digital signal processor (DSP), an application specific integrated circuit (ASIC), a field-programmable gate array (FPGA) or other programmable logic device, a discrete gate or transistor logic device, a discrete hardware component, etc. The general-purpose processor may be a microprocessor or the processor may also be any conventional processor or the like.

The embodiments may detect the adjustment event for the displaying direction of the focus window, determine the displaying direction of the focus window based on the adjustment event, and adaptively adjust the displaying direction of the underlying application corresponding to the focus window based on the displaying direction of the focus window. The disclosure may achieve flexible control of the displaying direction of the focus window, and enable the displaying direction of the corresponding underlying application to correspond to the displaying direction of the focus window. The display effect and user experience can be effectively improved.

### Embodiment Four

As illustrated in Fig. 5, embodiments provide a mobile terminal 5. The mobile terminal 5 includes: a processor 50, a memory 51, and a computer program 52 stored in the memory 51 and running on the processor 50, such as a program for controlling a displaying direction. When the processor 50 executes the computer program 52, the actions in the foregoing embodiments of the method for controlling the displaying direction are implemented, for example, actions at blocks S101 to S103 illustrated in FIG. 1. Alternatively, when the processor 50 executes the computer program 52, the functions of the modules in the foregoing device embodiments are implemented, for example, the functions of the modules 401 to 403 illustrated in FIG. 4.

Exemplarily, the computer program 52 may be divided into one or more modules, and the one or more modules are stored in the memory 51 and executed by the processor 50 to complete the disclosure. The one or more modules may be a series of computer program instruction segments capable of completing specific functions, and the instruction segments are configured to describe the execution process of the computer program 52 in the mobile terminal 5. For example, the computer program 52 may be divided into the detecting module, the window direction determining module, and the application direction adjusting module. The specific functions of each module are as follows.

The detecting module is configured to detect an adjustment event for a displaying direction of a focus window, the focus window being a window being currently operated by a user, and the adjustment event being an event for triggering a terminal to adjust the displaying direction of the focus window.

The window direction determining module is configured to determine the displaying direction of the focus window based on the adjustment event when the adjustment event is detected.

The application direction adjusting module is configured to adaptively adjust a displaying direction of an underlying application corresponding to the focus window based on the displaying direction of the focus window.

The mobile terminal 5 may include, but be not limited to, a processor 50 and a memory 51. Those skilled in the art can understand that FIG. 5 is only an example of the mobile terminal 5, and does not constitute a limitation on the mobile terminal 5. The mobile terminal 5 may include more or less components than those illustrated in FIG., or a combination of certain components, or different components. For example, the mobile terminal may also include an input and output device, a network access device, and a bus.

The so-called processor 50 may be a central processing unit, or other general-purpose processor, or a digital signal processor, or an application specific integrated circuit, or a field-programmable gate array or other programmable logic device, a discrete gate or transistor logic device, or a discrete hardware component, or the like. The general-purpose processor may be a microprocessor or the processor may also be any conventional processor or the like.

The memory 51 may be an internal storage unit of the mobile terminal 5, such as a hard disk or a memory of the mobile terminal 5. The memory 51 may also be an external storage device of the mobile terminal 5, such as a plug-in hard disk, a smart media card (SMC), and a secure digital (SD) equipped on the mobile terminal 5. Further, the memory 51 may also include both an internal storage unit of the mobile terminal 5 and an external storage device of the mobile terminal 5. The memory 51 is configured to store the computer program and other programs and data required by the mobile terminal. The memory 51 is also configured to temporarily store data that has been output or will be output.

Those skilled in the art can clearly understand that for the convenience and conciseness of the description, only the division of the above-mentioned functional units and modules is used as an example. In practical applications, the above-mentioned functions can be allocated to different functional units and modules as required for implementing as needed. That is, the internal structure of the device is divided into different functional units or modules to complete all or part of the functions described above. The functional units and modules in the embodiments can be integrated into one processing unit, or each unit can exist alone physically, or two or more units can be integrated into one unit. The above-mentioned integrated unit can be realized in the form of hardware, and also may be realized in the form of software functional unit. In addition, the specific names of the functional units and modules are only for the convenience of distinguishing each other, and are not used to limit the scope of the disclosure. For the specific working process of the units and modules in the foregoing system, reference may be made to the corresponding process in the foregoing method embodiments, which is not repeated here.

In the above-mentioned embodiments, the description of each embodiment has its own focus. For parts that are not detailed or recorded in a certain embodiment, reference may be made to related descriptions of other embodiments.

Those skilled in the art can realize that units and algorithm actions described in combination with the embodiments disclosed herein can be implemented by electronic hardware or a combination of computer software and electronic hardware. Whether these functions are executed by hardware or software depends on the specific applications and design constraints of the technical solutions. Professionals and technicians may employ different methods for each specific application to implement the described functions, but such implementation should not be considered beyond the scope of the disclosure.

In the embodiments provided in the disclosure, it should be understood that the disclosed system/mobile terminal and method may be implemented in other ways. For example, the system/mobile terminal embodiments described above are only illustrative. For example, the division of the modules or units is only a logical function division, and there may be other divisions in actual implementation, such as multiple units or components can be combined or integrated into another system, or some features can be omitted or not implemented. In addition, the displayed or discussed mutual coupling or direct coupling or communication connection may be through some interfaces, or the indirect coupling or communication connection among devices or units may be in electrical, mechanical or other forms.

The units described as separate components may or may not be physically separated, and the components displayed as units may or may not be physical units, that is, they may be located in one place, or they may be distributed on multiple network units. Some or all of the units may be selected according to actual needs to achieve the objectives of the solutions of the embodiments.

In addition, the functional units in the various embodiments of the disclosure may be integrated into one processing unit, or each unit may exist alone physically, or two or more units may be integrated into one unit. The above-mentioned integrated unit can be realized in the form of hardware or software functional unit.

In addition, each functional unit in the present disclosure may be integrated in one progressing module, or each functional unit exists as an independent unit, or two or more functional units may be integrated in one module. The integrated module can be embodied in hardware, or software. If the integrated module is embodied in software and sold or used as an independent product, it can be stored in the computer readable storage medium. Based on this understanding, all or part of the processes in the above-mentioned method embodiments may be completed by instructing relevant hardware through a computer program. The computer program can be stored in a computer-readable storage medium. When the computer program is executed by the processor, the actions of the foregoing method embodiments may be realized. The computer program includes computer program codes. The computer program codes may be in the form of source codes, object codes, executable file, or some intermediate forms. The computer-readable medium may include: any entity or device capable of carrying the computer program codes, a recording medium, a U disk, a mobile hard disk, a magnetic disk, an optical disk, a computer memory, a read only memory (ROM), a random access memory (RAM), electrical carrier signals, telecommunications signals, and software distribution media. It should be noted that the content contained in the computer-readable medium can be appropriately added or deleted according to the requirements of the legislation and patent practice in the jurisdiction. For example, in some jurisdictions, the computer-readable medium does not include electrical carrier signals and telecommunication signals according to the legislation and patent practice.

The above-mentioned embodiments are only used to illustrate the technical solutions of the disclosure, not to limit the disclosure. Although the disclosure has been described in detail with reference to the foregoing embodiments, those skilled in the art should understand that they can still modify the technical solutions described in the foregoing embodiments, or equivalently replace some of the technical features. These modifications or replacements do not deviate the essence of the corresponding technical solutions from the spirit and scope of the technical solutions of the embodiments of the disclosure, which should be included in the scope of the disclosure.

## Claims

1. A method for controlling a displaying direction, comprising:
detecting an adjustment event for a displaying direction of a focus window, the focus window being a window being currently operated by a user, and the adjustment event being an event for triggering a terminal to adjust the displaying direction of the focus window;
determining the displaying direction of the focus window based on the adjustment event when the adjustment event is detected; and
adaptively adjusting a displaying direction of an underlying application corresponding to the focus window based on the displaying direction of the focus window.

2. The method of claim 1, wherein,
the adjustment event comprises a change in a screen direction of the terminal;
detecting the adjustment event for the displaying direction of the focus window comprises detecting whether the screen direction of the terminal changes; and
determining the displaying direction of the focus window based on the adjustment event comprises adjusting the displaying direction of the focus window to a current screen direction of the terminal when the screen direction of the terminal changes.

3. The method of claim 2, after adjusting the displaying direction of the focus window to the current screen direction of the terminal when the screen direction of the terminal changes, further comprising:
adjusting a current horizontal width of the focus window to be less than or equal to a current horizontal width of the terminal when the screen direction of the terminal is switched from a landscape direction to a portrait direction; and
adjusting a current vertical width of the focus window to be less than or equal to a current vertical width of the terminal when the screen direction of the terminal is switched from a portrait direction to a landscape direction.

4. The method of claim 2, wherein the screen direction of the terminal comprises an oblique direction, and an angle between the oblique direction and a landscape direction and an angle between the oblique direction and a portrait direction both are greater than 0° and less than 90°.

5. The method of claim 1, after determining the displaying direction of the focus window based on the adjustment event, further comprising:
adjusting a displaying direction of a non-focus window to be the same as the displaying direction of the focus window when there is the non-focus window; and
adaptively adjusting a displaying direction of an underlying application corresponding to the non-focus window based on the displaying direction of the non-focus window.

6. The method of claim 1, wherein,
the adjustment event comprises receiving an instruction for adjusting the displaying direction of the focus window, the instruction for triggering the terminal to adjust the displaying direction of the focus window;
detecting the adjustment event for the displaying direction of the focus window comprises detecting whether the instruction is received; and
determining the displaying direction of the focus window based on the adjustment event comprises adjusting the displaying direction of the focus window to a displaying direction corresponding to the instruction when the instruction is received.

7. The method of claim 6, wherein,
the instruction is inputted through a button for inputting the instruction or a toolbar in a region where a current displaying interface or the focus window is located;
or, the instruction is inputted through a system setting interface of the terminal;
or, the instruction is inputted through a voice control manner;
or, the instruction is inputted through a gesture control manner.

8. The method of claim 6, wherein the instruction comprises text information, voice information, or a gesture.

9. The method of claim 8, wherein when the instruction comprises text information indicating leftward rotation, the focus window rotates leftward.

10. The method of claim 1, wherein,
the adjustment event comprises a touch event for the focus window; and
determining the displaying direction of the focus window based on the adjustment event comprises adjusting the displaying direction of the focus window to a displaying direction corresponding to the touch event based on the touch event.

11. The method of claim 10, wherein, the touch event comprises:
an operation of long pressing a blank region of the focus window;
or, an operation of single-point or multi-point touching and rotating a blank region of the focus window;
or, an operation of single-point or multi-point touching and rotating a corner region of the focus window.

12. The method of claim 10, wherein the touch event comprises an operation of single-point touching and sliding a corner region of the focus window.

13. The method of claim 12, wherein a sliding direction is a rotation direction of the focus window, and a rotation angle is positively correlated with a sliding distance along the sliding direction.

14. The method of any one of claims 1 to 13, wherein the focus window comprises a free window.

15. The method of any one of claims 1 to 13, further comprising:
adaptively adjusting a displaying direction of a new focus window based on the displaying direction of the focus window when the focus window is switched to the new focus window.

16. The method of any one of claims 1 to 13, wherein the terminal comprises a mobile terminal.

17. The method of claim 16, wherein the mobile terminal supports four displaying modes: a full-screen mode, a split-screen mode, a picture-in-picture mode, and a FreeForm mode.

18. The method of claim 17, wherein the mobile terminal comprises an Android terminal.

19. A system for controlling a displaying direction, comprising:
a detecting module, configured to detect an adjustment event for a displaying direction of a focus window, the focus window being a window being currently operated by a user, and the adjustment event being an event for triggering a terminal to adjust the displaying direction of the focus window;
a window direction determining module, configured to determine the displaying direction of the focus window based on the adjustment event when the adjustment event is detected; and
an application direction adjusting module, configured to adaptively adjust a displaying direction of an underlying application corresponding to the focus window based on the displaying direction of the focus window.

20. A mobile terminal, comprising a memory, a processor, and a computer program stored in the memory and for running on the processor, wherein the processor is configured to perform actions of the method according to any one of claims 1 to 17 when executing the computer program.
